# EUROPEAN PATENT APPLICATION

(11) **EP 2 336 858 A2**
(43) Date of publication of application: **22.06.2011**
(21) Application number: 09806866.1
(22) Date of filing: 13.08.2009
(51) Int. Cl.: G06F 3/041

(54) **TOUCH SENSING PANEL INCLUDING BIDIRECTIONAL ADJACENT ELECTRODES, AND TOUCH SENSING APPARATUS**

(30) Priority: 14.08.2008 KR 20080079848
(71) Applicant: Melfas Inc., Seoul 153-801 (KR)
(72) Inventor: RYU, Siwon, Seoul 153-801 (KR)
(74) Representative: pronovem
(86) International application number: PCT/KR2009/004520
(87) International publication number: WO 2010/019004

(57) **Abstract**

The present invention relates to a touch sensing panel and a touch sensing apparatus. The touch sensing panel according to the present invention includes a substrate, and a plurality of sensing electrodes arranged on the substrate and extended in one axial direction to generate a sensed signal in accordance with a contact, wherein at least one of the plurality of sensing electrodes is arranged such that the one sensing electrode is adjacent to another sensing electrode on both sides of the one axial direction. According to the present invention, provided is a touch sensing panel in which a plurality of sensing electrodes are arranged and extend in one axial direction to minimize a bezel area, and at least one of the plurality of sensing electrodes is arranged such that the one sensing electrode is adjacent to another sensing electrode at both sides of the one axial direction to accurately determine a plurality of touch inputs.

## Description

### Technical Field

The present invention relates to a touch sensing panel and a touch sensing apparatus, and more particularly, relates to a touch sensing panel and a touch sensing apparatus capable of accurately determining multiple touch inputs by disposing a plurality of sensing electrodes that extend in one axial direction, and arranging at least one sensing electrode among the plurality of sensing electrodes to be adjacent to another sensing electrode at both sides of the one axial direction.

### Background Art

For various kinds of electric devices, various technologies for miniaturizing an electric device and maximizing a display screen are being proposed. In response to a miniaturization of electric devices, electric devices recognizing an input of a user through a touch input device are increasing. In particular, a touch sensing panel providing an input scheme through a touch is applicable to various devices including a portable electric device.

The touch sensing panel may be classified into a resistive type, a capacitance type, an ultrasonic wave type, an infrared light type, and the like based on an operating mode. When the capacitance type is used, a thin touch sensing panel may be manufactured. Since a capacitance type touch sensing panel is durable and enables multiple touches, the capacitance type touch sensing panel may be widely used for various electric devices.

The capacitance type touch sensing panel may dispose a sensing electrode patterned in a predetermined shape on a substrate, and the sensing electrode may be connected to a control unit through a connection pad. In response to a touch, a touched signal generated in the sensing electrode may be transferred to the control unit, and the control unit may determine whether the sensing electrode is touched, a touched location, and the like.

However, since the capacitance type touch sensing panel may determine whether the sensing electrode is touched, a touched location, and the like using the touched signal according to the touch, a case where multiple touch inputs occur, whether the sensing electrode is touched and a touched location may be difficult to be determined.

### Disclosure of Invention

### Technical Goals

An aspect of the present invention provides a touch sensing panel and a touch sensing apparatus capable of implementing various user interfaces by arranging a plurality of sensing electrodes on a substrate to extend in one axial direction, and arranging at least one sensing electrode among the plurality of sensing electrodes such that the sensing electrode is adjacent to another sensing electrode on both sides of the one axial direction, and thereby accurately determining each touch input in response to multiple touch inputs.

### Technical solutions

According to an aspect of the present invention, there is provided a touch sensing panel, including a substrate, and a plurality of sensing electrodes arranged on the substrate and extended in one axial direction to generate a sensing signal in response to a touch, wherein at least one sensing electrode among the plurality of sensing electrodes is adjacent to another sensing electrode on both sides of the one axial direction.

According to an aspect of the present invention, there is provided a touch sensing apparatus, including a plurality of sensing electrodes arranged on one surface of a substrate and extended in one axial direction, and a control unit connected to the plurality of sensing electrodes to receive a sensing signal, and to determine a touch information using the sensing signal, wherein at least one sensing electrode among the plurality of sensing electrodes is arranged to be adjacent to another sensing electrode in both sides of the one axial direction.

According to the present invention, a plurality of sensing electrodes are arranged on a substrate to extend in one axial direction, and to adjacent to another sensing electrode. Accordingly, a touch sensing panel and a touch sensing apparatus capable of accurately determining each touch input in response to multiple touch inputs by arranging a sensing electrode may be provided. Thus, more various user interfaces may be implemented, and an error occurring due to a resistance component of the sensing electrode may be and thus, a touched location may be accurately calculated.

### Brief Description of Drawings

FIG. 1 is a diagram illustrating an electric device having a touch sensing apparatus according to an embodiment of the present invention.
FIG. 2A is a diagram illustrating a touch sensing apparatus according to an embodiment of the present invention.
FIG. 2B is a cross-sectional view illustrating a cross section in A-A' direction of the touch sensing apparatus illustrated in FIG. 2A.
FIG. 3 through FIG. 5 are diagrams illustrating a touch sensing panel according to an embodiment of the present invention.
FIG. 6 is a diagram illustrating an electrode configuration of a touch sensing panel according to an embodiment of the present invention.
FIG. 7A and FIG. 7B are diagrams illustrating a touched location detecting scheme of the touch sensing apparatus illustrated in FIG. 2A.
FIG. 8 is a block diagram illustrating a touch sensing control unit according to an embodiment of the present invention.
FIG. 9 is a diagram illustrating a touch sensing panel according to an embodiment of the present invention.
FIG. 10 is a diagram illustrating an expanded view of a portion of a sensing electrode included in the touch sensing panel illustrated in FIG. 5 and FIG. 9.

### Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

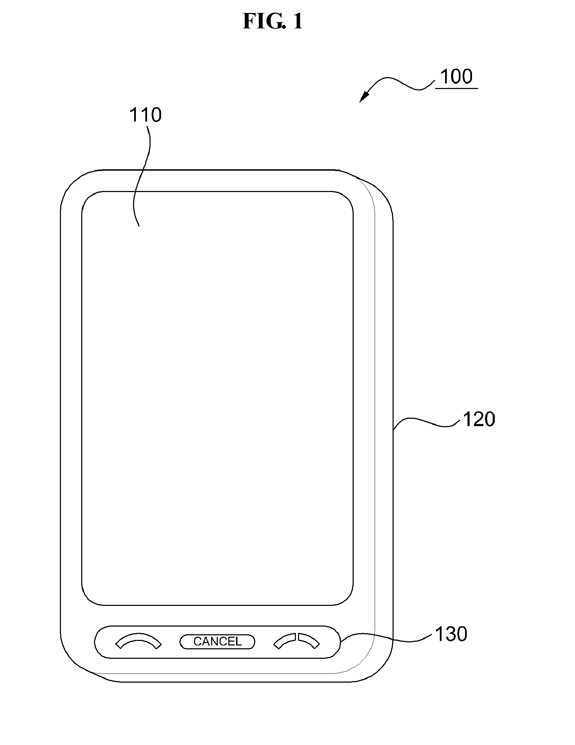

FIG. 1 is a diagram illustrating an electric device 100 having a touch sensing apparatus according to an embodiment of the present invention. Hereinafter, the electric device to which the touch sensing apparatus is applied may include electronic equipment such as a television, a digital versatile disc (DVD) player, a refrigerator, a laptop computer, a washing machine, a desktop computer, a liquid crystal display, and the like in addition to a portable electric device such as a mobile telecommunication terminal, a portable media player (PMP), a personal digital assistant (PDA), a navigation, an MPEG Audio Layer-3 (MP3) player, a portable game machine, a laptop computer, and the like.

The electric device 100 according to an embodiment of the present invention may include a display 110 having the touch sensing apparatus, a housing 120 constituting an appearance of the electric device 100, and an input key 130 provided separate from the touch sensing apparatus. The input key 130 may include a frequently used key for operating the electric device 100 separate from the touch sensing apparatus, and may be implemented by a mechanical input key or a touch key having a touch sensor, and the like. The input key 130 may be removed to process all inputs thorough the touch sensing apparatus.

The display 110 may correspond to a module for outputting an image associated with a motion to a user, and may be implemented by the liquid crystal display, a plasma display panel, or an organic light emitting device, and the like. The touch sensing apparatus may be attached onto the display 110 to receive a touch input through a body of the user or a stylus pen, and the like.

The touch sensing apparatus may be attached onto the display 110 to determine an input in response to a touch. The touch sensing apparatus may include a substrate, a sensing electrode arranged on the substrate, and a control unit connected to the sensing electrode to determine an input in response to the touch. A transparent window may be attached onto the sensing electrode to receive a touch from the user, and the transparent window may be preferably configured by a material resistant to a scratch and a shock such as a strengthened glass, an acryl, and the like. The substrate where the sensing electrode is arranged may be formed by a transparent material to be used for the window.

In response to a touch applied to the transparent window, a predetermined capacitance change may occur in the sensing electrode, the transparent window, and a touched object. The control unit may be electrically connected to the sensing electrode to receive the capacitance change as a sensed signal, and may determine whether a touch occurs and a touched location, and the like using the received sensed signal. The control unit may be mounted on a flexible printed circuit board (FPCB), or may be mounted on the substrate of the touch sensing apparatus in a chip-on-glass (COG) form to be electrically connected to the sensing electrode. The touched location calculated by the control unit may be transferred to a central processing unit (CPU) of the electric device to be used for an operation control of the electric device.

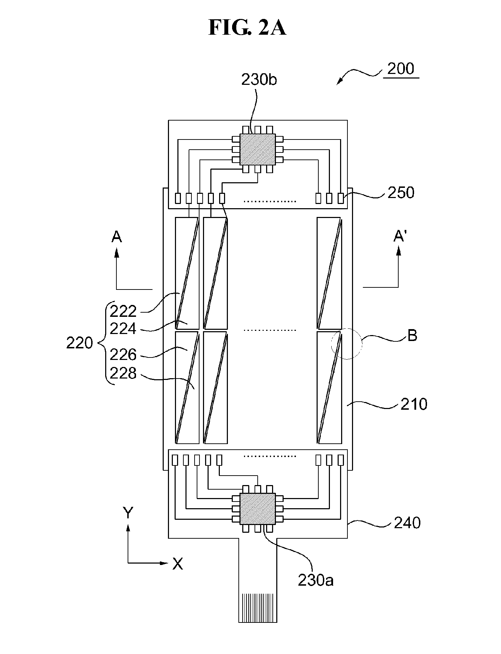

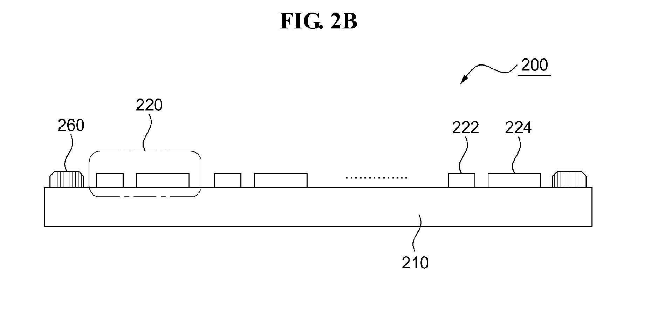

FIG. 2A and FIG. 2B are diagrams illustrating a touch sensing apparatus 200 according to an embodiment of the present invention. FIG. 2A is a diagram illustrating a plane view of the touch sensing apparatus 200, and FIG. 2B is a diagram illustrating a cross-sectional view of a panel included in the touch sensing apparatus 200 illustrated in FIG. 2A.

Referring to FIG. 2A, the touch sensing apparatus 200 according to an embodiment of the present invention may include a substrate 210, a plurality of sensing electrodes 220 arranged on the substrate 210, and control units 230A and 230B electrically connected to the plurality of sensing electrodes 220 to determine whether a touch occurs, a touched location, and the like using a sensed signal generated in the plurality of sensing electrodes 220.

The substrate 210 may correspond to a substrate supporting the touch sensing apparatus 200, and may be formed by a glass, or a material such as polyethylene terephthalate (PET), a polycarbonate (PC), a polyethersulfone (PES), a polyimide (PI), a poly methyl methacrylate (PMMA), or an acryl, and the like. A material having a high penetrability with respect to light may be used for the substrate 210 considering a case where the substrate 210 is arranged on the display 110 of the electric device 100.

The plurality of sensing electrodes 220 may be formed by a transparent conducting material such as an Indium-Tin Oxide (ITO), an Indium-Zinc Oxide (IZO), or a Zinc Oxide (ZnO), and the like. According to an embodiment, the plurality of sensing electrodes 220 may be formed by applying the transparent conducting material onto the substrate 210, and patterning the transparent conducting material into a predetermined shape. Referring to FIG. 2A, the plurality of sensing electrodes 220 may be formed on the substrate 210 to be extended in one direction. The one direction in which the plurality of sensing electrodes 220 are extended may correspond to a major axial direction of a substantial valid display region where the plurality of sensing electrodes 220 are arranged on the substrate 210, for example, the one direction may correspond to a Y axial direction in the present embodiment. The plurality of sensing electrodes 220 may be arranged in another direction other than the major axial direction of the valid display region, for example, arranged in an X axial direction in the present embodiment.

The plurality of sensing electrodes 220 may be arranged to be extended in the one direction, and at least one of the plurality of sensing electrodes 220 may be arranged to be adjacent to another plurality of sensing electrodes 220 at both ends of the one axial direction. The plurality of sensing electrodes 220 may include triangular shaped first sensing electrodes 222 and 226, and second sensing electrodes 224 and 228, and at least one of the sensing electrodes 222, 224, 226, and 228 may be adjacent to another sensing electrode 222, 224, 226, and 228 at both ends in the Y axial direction. Referring to FIG. 2A, each of the first sensing electrode 226 and the second sensing electrode 224 located at the center may be adjacent to two sensing electrodes 222, 224, 226, and 228 at the top side and the bottom side in the Y axial direction. That is, the first sensing electrode 226 may be adjacent to the second sensing electrodes 224 and 228 at the top side and the bottom side in the Y axial direction, and the second sensing electrode 224 may be adjacent to the first sensing electrodes 222 and 226 at the top side and the bottom side in the Y axial direction. The upper first sensing electrode 222 may correspond to the upper second sensing electrode 224 to form a first sub-electrode pair, and the lower first sensing electrode 226 may correspond to the lower second sensing electrode 228 to form a second sub-electrode pair.

The first sensing electrodes 222 and 226, and the second sensing electrodes 224 and 228 adjacent to each other may include at least one boundary shape corresponding to each other. In FIG. 2A, the first sensing electrode 222 may include the hypotenuse of a right triangle as the boundary shape corresponding to the neighboring second sensing electrode 224, and the second sensing electrode 224 may include, as the boundary shape, the hypotenuse corresponding to the neighboring first sensing electrode 222 and the base line corresponding to the neighboring first sensing electrode 226. The boundary shape included in each of the sensing electrodes 222, 224, 226, and 228 may vary with a shape of the sensing electrodes 222, 224, 226, and 228 patterned on the substrate 210.

As described above, by forming a touch sensing region using the plurality of sensing electrodes 220, an accuracy of a touch sensing may be enhanced. In particular, since at least one of the plurality of sensing electrodes 220 may be arranged to be adjacent to another sensing electrode at both ends of the one direction to increase a density of the plurality of sensing electrodes 220 on the substrate 210, the capacitance change due to each touch input may be separately and accurately measured not only for a single touch input but also for multiple touch inputs. Accordingly, a separate location and a location between touch inputs, and the like of multiple touch inputs by the user may be effectively determined to implement various user interfaces.

In response to a touch, a touched signal including the capacitance change may be generated in each of the sensing electrodes 222, 224, 226, and 228 adjacent to a region formed by the touch, and the touched signal may be transferred to the control units 230A and 230B through a separate wired pattern. The capacitance change included in the touched signal may vary with a touch characteristic such as an area of a touched region, or a strength of the touch, and the like, and the capacitance change may occur between each of the sensing electrodes 222, 224, 226, and 228 and a touched object. According to an embodiment, by using the sensing electrodes 222, 224, 226, and 228 as a first conductive plate, and using the touched object as a second conductive plate, the sensed signal including the capacitance change occurring between the sensing electrodes 222, 224, 226, and 228 and the touched object may be obtained.

In the present embodiment, a sensed signal generated in the first sensing electrode 222 and the second sensing electrode 224 may be transferred to the second control unit 230B, and a sensed signal generated in the first sensing electrode 226 and the second sensing electrode 228 may be transferred to the first control unit 230A. Unlike FIG. 2A, the control units 230A and 230B may be configured by a single chip. Hereinafter, for convenience of description, it is assumed that two control units 230A and 230B may determine a touch by using the sensed signal.

To transmit a power source signal and touched data between the first control unit 230A and the second control unit 230B, a separate signal line may be arranged on the substrate 210. In this instance, the signal line may be arranged along an external part of the substrate 210. To reduce an area of a region where the signal line is arranged, a power source signal line and an interface signal line may be insulate from each other to form a multi-layer structure.

FIG. 2B is a cross-sectional view illustrating a cross section in A-A' direction of the touch sensing apparatus illustrated in FIG. 2A. Referring to FIG. 2B, the plurality of sensing electrode 220 may be arranged on the substrate 210, and a separate wiring pattern 260 may be arranged for a communication between of the first control unit 230A and the second control unit 230B on the external part of a display region where the sensing electrode 220 is arranged. As described above, the wiring pattern 260 may include the power source signal line, the interface signal line, and the like.

The plurality of sensing electrode 220 may include the first sensing electrode 222 and the second sensing electrode 224. By dividing the plurality of sensing electrode 220 into the first sensing electrode 222 and the second sensing electrode 224, an accuracy of detecting a touched location of the touch sensing apparatus 200 may be enhanced, and a density of the sensing electrodes 222 and 224 may be increased, enabling an accurate determination with respect to multiple touch inputs. When the sensing electrodes 222 and 224 are formed at a long length along one axial direction, that is, the Y axial direction, an error due to a resistance component may occur during the determination of the touch. Thus, the control units 230A and 230B may include a compensation logic for compensating for a calculated touch coordinate or a touched signal generated in each of the sensing electrode 222 and 224. For example, a predetermined table referred for the compensation may be included.

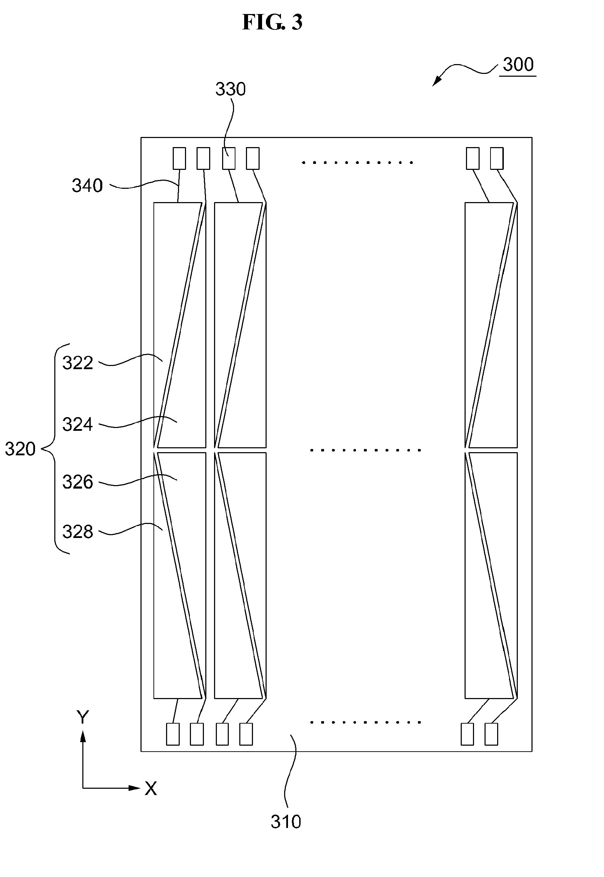

FIG. 3 through FIG. 5 are diagrams illustrating touch sensing panels 300, 400, and 500 according to another embodiment of the present invention. Similar to the touch sensing apparatus 200 illustrated in FIG. 2, the touch sensing panels 300, 400, and 500 illustrated in FIG. 3 through FIG. 5 may include substrates 310, 410, and 510, sensing electrodes 320, 420, and 520, connection pads 330, 430, and 530, and the like. Since the touch sensing panel 300, 400, and 500 are illustrated in FIG. 3 through FIG. 5, a control unit is not illustrated. Hereinafter, a description about the same component as the touch sensing apparatus 200 illustrated in FIG. 2 will be omitted.

Referring to FIG. 3, the sensing electrode 320 may have a up-down symmetry based on a central line in an Y axial direction, and may be divided in to a plurality of first sensing electrodes 322 and 328, and second sensing electrodes 324 and 326. The first sensing electrodes 322 and 328 may be disposed relatively on the left side, and the second sensing electrodes 324 and 326 may be disposed relatively on the right side. Similar to a case of FIG. 2A, each of the first sensing electrodes 322 and 328, and the second sensing electrodes 324 and 326 may be connected to a sensing channel of a control unit through the connection pad 330, and a sensed signal generated in response to a touch may be transferred to the control unit.

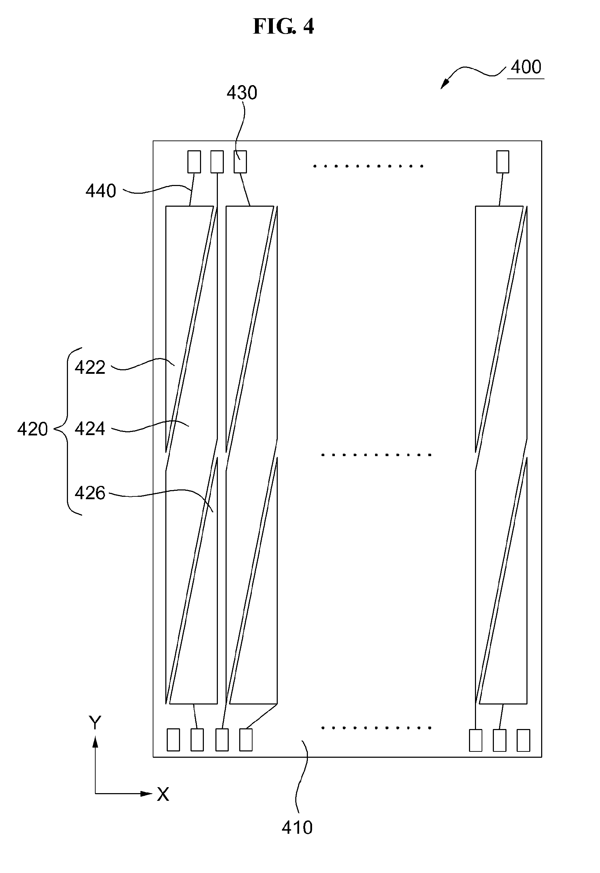

Referring to FIG. 4, unlike a case of FIG. 2 and FIG. 3, the sensing electrode 420 in the present embodiment may be divided into triangular shaped first sensing electrodes 422 and 426, and a trapezoidal shaped second sensing electrode 424. The first sensing electrodes 422 and 426 may be arranged on each of the top side and bottom side of the second sensing electrode 424 to be extended in one axial direction, that is, an Y axial direction, and the first sensing electrode 422 disposed on the top side of the second sensing electrode 424 and the first sensing electrode 426 disposed on the bottom side of the second sensing electrode 424 may include at least one boundary shape corresponding to the second sensing electrode 424. The second sensing electrode 424 disposed between the upper and lower first sensing electrodes 422 and 426 may be patterned to correspond to shape of the first sensing electrodes 422 and 426, and may be formed in a trapezoidal shape to correspond to the hypotenuse of the first sensing electrodes 422 and 426 in a right triangular shape in the present embodiment.

Since a number of the first sensing electrodes 422 and 426, and the second sensing electrode 424 is small less than when comparing a case of FIG. 2 and FIG. 3, in a case of dividing the sensing electrode 420 as FIG. 4, a resolution of a touch sensing in the Y axial direction may become relatively lower. In contrast, since a number of sensing channels of a control unit (not shown) used for connecting the control unit to each of the first sensing electrodes 422 and 426, and the second sensing electrode 424 may be reduced, a size of a screen may be relatively small and a high resolution of the touch sensing may not be required. In a case where the number of the sensing channels of the control unit is not sufficient, the sensing electrode 420 may be preferably formed in a pattern similar to FIG. 4.

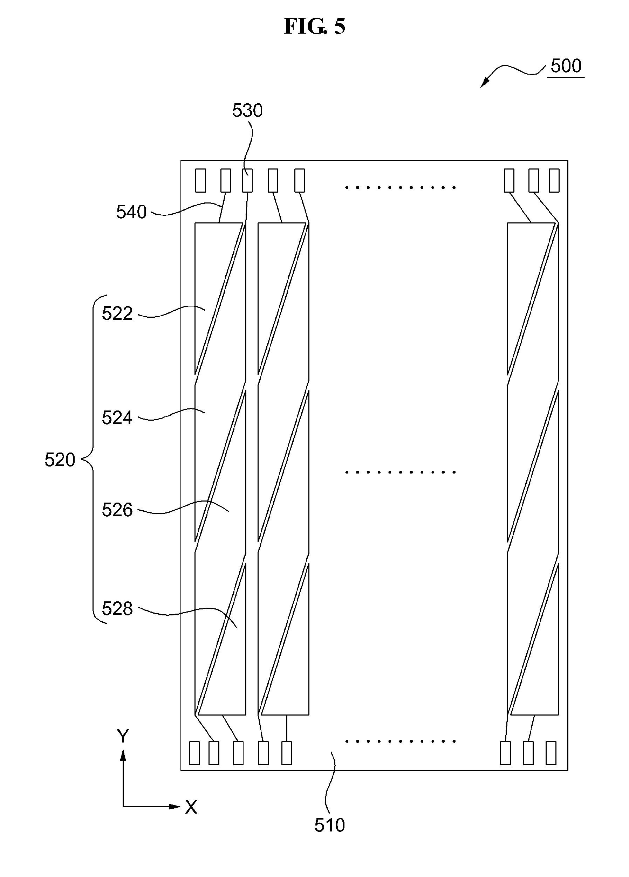

FIG. 5 illustrates the touch sensing panel 500 where a plurality of second sensing electrodes 524 and 526 having a trapezoidal shape are formed. The touch sensing panel 500 may be capable of accurately determining multiple touch inputs by enhancing a resolution of a touch sensing in a Y axial direction comparing to the panel of FIG. 4. The sensing electrode 520 may be divided into a plurality of triangular shaped first sensing electrodes 522 and 528, and a plurality of trapezoidal shaped second sensing electrodes 524 and 526.

Each sensing electrode 520 may be connected to a control unit (not shown) through the connection pad 530. According to an embodiment, the first sensing electrode 522 and the second sensing electrode 524 disposed on the top side in the Y axial direction may be connected to a first control unit (not shown) through the connection pad 530 on the top side, and the first sensing electrode 528 and the second sensing electrode 526 disposed on the bottom side in the Y axial direction may be connected to a second control unit (not shown) through the connection pad 530 on the bottom side. A control unit may determine whether a touch occurs or a touched location, and the like using a capacitance change occurring in response to a touch and received from the sensing electrode 520.

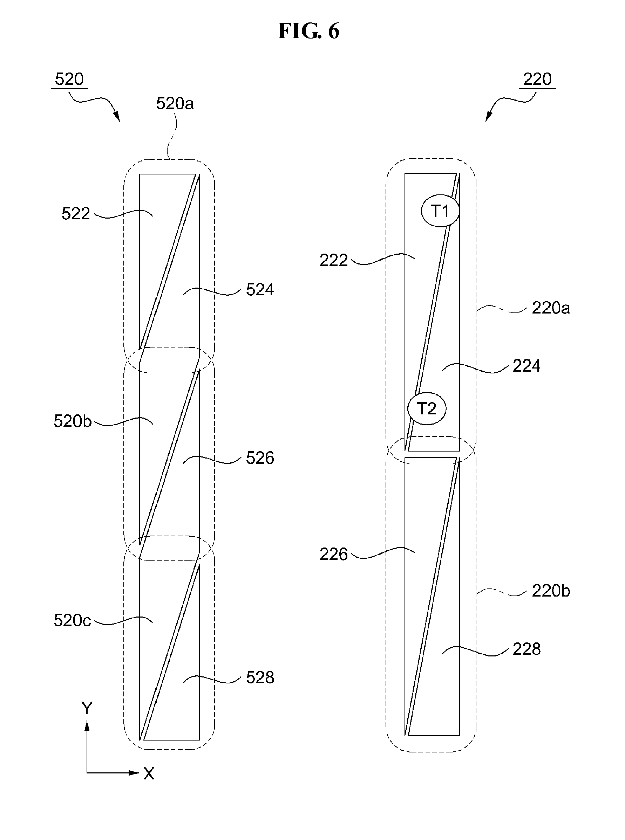

By dividing the sensing electrode 520 as illustrated in FIG. 5, a high touch sensing resolution may be acquired while using the same number of the touch channels as a case of FIG. 2 and FIG. 3. When the sensing electrode 520 is divided as illustrated in FIG. 2 and FIG. 3, a touched region generated by the sensing electrode 520 may be divided into two regions of a top region and a bottom region along the Y axial direction. For FIG. 5, the sensing electrode 520 may be divided into three regions along the Y axial direction. Hereinafter, an effect due to the division will be further described with reference to FIG. 6.

FIG. 6 is a diagram further illustrating a divided configuration of the sensing electrodes 220 and 520 illustrated in FIG. 2 and FIG. 5. Referring to FIG. 6, the sensing electrode 220 illustrated in FIG. 2 may be substantially divided into two sensing regions 220a and 220b along the Y axial direction, and the sensing electrode 520 illustrated in FIG. 5 may be substantially divided into three sensing regions 520a, 520b, and 520c. Thus, a resolution in the Y axial direction may increase for when determining a touched location, and an accuracy of determining a touched location may be enhanced.

The sensing electrode 220 illustrated in FIG. 2 may be divided into two sensing regions 220a and 220b due to the first sensing electrode 222 and the second sensing electrode 224, and the sensing electrode 520 illustrated in FIG. 5 may be divided into three sensing regions 520a, 520b, and 520c. Accordingly, an accuracy of the touch sensing in the Y axial direction may be increased and thus, an accuracy of determining a coordinate in the touch sensing apparatus using a single layer electrode may be enhanced.

In a case where two or more positions are simultaneously touched, a number of sensing regions 520a, 520b, and 520c capable of recognizing a separate touch may increase and thus, a multi-touch input may be effectively processed.

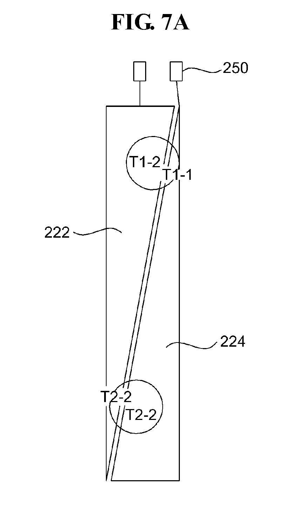

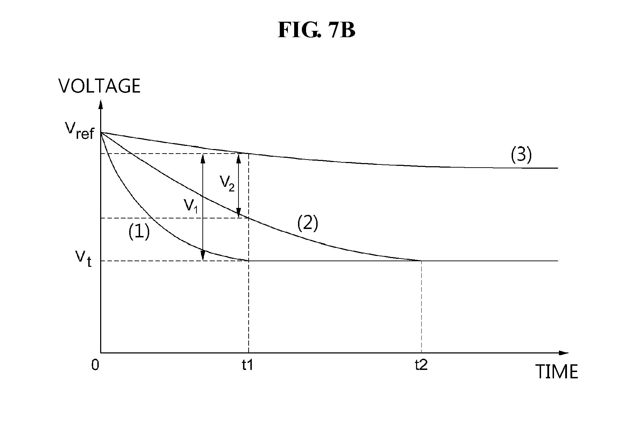

FIG. 7A and FIG. 7B are diagrams illustrating a touched location detecting scheme of the touch sensing apparatus according to an embodiment of the present invention. For convenience of description, the touch sensing apparatus 200 illustrated in FIG. 2 may be assumed for FIG. 7A and FIG. 7B. However, the present scheme may be applied to the touch sensing panels 300, 400, and 500 illustrated in FIG. 3 through FIG. 5.

In response to a touch on the touch sensing apparatus 200, a capacitance may be generated in a touched region to cause a charge redistribution. Thus, a voltage change as a curve (1) or (2) illustrated in FIG. 7B may be detected. As an embodiment, in response to an input to a location T1, a predetermine capacitance component C1 proportional to a touched area may be generated between the sensing electrodes 222 and 224 and a touched object, and the capacitance component C1 may be expressed by a sum of a capacitance component C1-1 generated on the touched area T1-1 of the sensing electrode 224, and a capacitance component C1-2 generated on the touched area T1-2 of the sensing electrode 222.

In this instance, an electric charge may be charged in the capacitance component C1-1 and C1-2 due to a charge redistribution principle. Since the capacitance component C1-1 having a relatively small area may have a lower capacitance component value than the capacitance component C1-2, a voltage change of the capacitance component C1-1 may be less than a voltage change of the capacitance component C1-2 after a predetermined period of time. A ratio of the voltage change of the capacitance component C1-1 and of the voltage change of the capacitance component C1-2 may be proportional to the area of the capacitance component C1-1 and the area of the capacitance component C1-2, respectively. Thus, by measuring a voltage, a location T1 may be determined.

In a case where a location T2 is touched, similar to a case of the location T1, a touched location may be determined using a relative ratio of a capacitance component generated on a touched area T2-1 of the sensing electrode 222 and a touched are T2-2 of the sensing electrode 224. In response to a touch occurring on the location T2, the capacitance component C2 generated between the sensing electrodes 222 and 224 and a touched object may be expressed by a sum of a capacitance component C2-1 generated on the touched area T2-1, and a capacitance component C2-2 generated on the touched area T2-2.

Accordingly, an electric charge may be charged in the capacitance component C2 due to a charge redistribution principle, and the location T2 may be located by measuring a ration of an electric charge charged in the capacitance components C2-1 and C2-2. Similar to a case of the location T1, the location T2 may be determined by measuring a ration of a voltage change of the capacitance components C2-1 and C2-2. Unlike a case of the location T1, since the touched area of the location T2 may be spaced relatively far from the connection pad 250 connected to the sensing electrode 222 and the sensing electrode 224, a resistance component may increase to cause an error in a process of determining a location where an input is received.

As described above, when a touched location is measured using a ratio of the capacitance component generated in a plurality of electrodes, for example, the sensing electrode 222 and the sensing electrode 224 overlapping with a touched area, the touched location may be detected with respect to a touch on the location T2 even through a time T2 for a sufficient charge redistribution has not passed. For the location T2, referring to a curve (2) illustrating a voltage change, by calculating a ratio of a voltage of the capacitance component C2-1 and a voltage of the capacitance component C2-2 to a voltage difference V₂ at time t1, a coordinate of the location T2 may be calculated before the time T2 passes.

As a scheme for correcting the error, a predetermined table may be used in the control units 230A and 230B. For convenience of description, the control units 230A and 230B may be illustrated as a control unit 230. A resistance value may be greater in a case of an input received by the location T2 than a case of an input received by the location T1 and thus, an error may occur when determining an input location with respect to the input received by the location T2. A predetermined resistance value for correcting the resistance value may be recorded in the predetermined table, and the input location may be accurately determined by correcting the resistance value with reference to the table in a case where a region spaced relatively far from the connection pad 250, such as the location T2 is touched.

In this instance, the table may be stored in a predetermined memory to be called and used each time the control unit 230 requires the table, and may correspond to a look-up table or a matching table. In addition to the resistance value for correcting the resistance component, a coordinate value for correcting an error occurring when determining a coordinate in response to an input may be recorded in the table. In this instance, when an input is received in a region spaced relatively far from the connection pad 250, the control unit 230 may determine a coordinate, and an accurate input location may be found by correcting the determined coordinate using a value recorded in the table.

The table may be determined in advance based on a resistance of a wiring pattern connecting the sensing electrode 220 and the connection pad 250, and the connection pad 250 included in the touch sensing apparatus 200, and the like. In another embodiment, the table may be updated in the control unit 230 by an input of a user. In a case of initially operating the touch sensing apparatus 200, or in a case where a power source of the electric device 100 including the touch sensing apparatus 200 is turned on, the control unit 230 may cause the user to touch-input a region adjacent to the connection pad 250 and a region spaced from the connection pad 250.

In response to the touch input by the user, the control unit 230 may generate a value for correcting an input coordinate or a resistance component. Even though the control unit 230 requests the user to touch-input a region of the location T2, and the user touch-inputs the region of the location T2, the control unit 230 may determine that the input occurs on another region other than the region of the location T2. In this case, data for correcting a coordinate between the region of the location T2 and a region recognized by the control unit 230 or the resistance value may be generated to be recorded in the table.

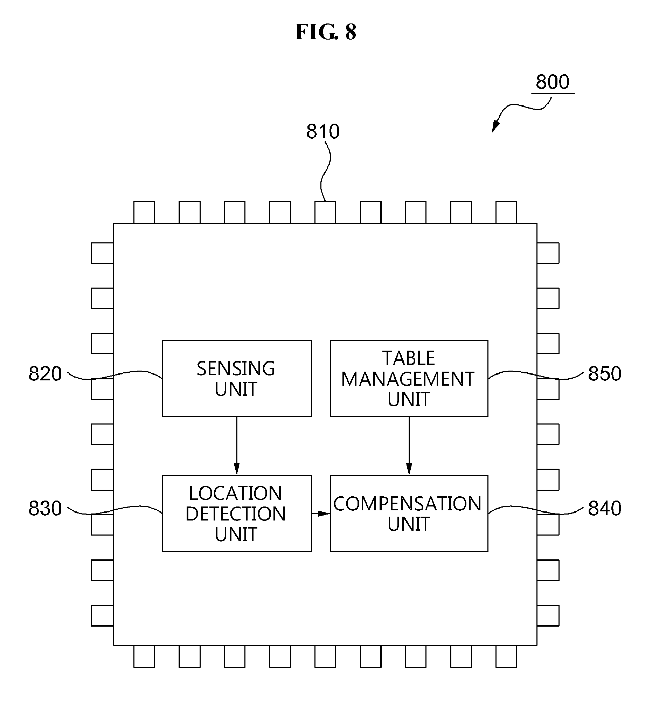

FIG. 8 is a block diagram illustrating a touch sensing control unit 800 according to an embodiment of the present invention. Referring to FIG. 8, the touch sensing control unit 800 according to an embodiment of the present invention may include a sensing channel 810 connected to the sensing electrodes 320, 420, and 520 through the connection pads 330, 430, and 530 of the touch sensing panels 300, 400, and 500, a sensing unit 820 to compute touch sensing data with respect to the sensing electrodes 320, 420, and 520 through the sensing channel 810, a processing unit 830 to correct the touch sensing data acquired by the sensing unit 820, and the like.

The sensing channel 810 may be connected to the connection pads 330, 430, and 530 through a predetermined circuit. Since the connection pads 330, 430, and 530 are electrically connected to the sensing electrodes 320, 420, and 520 in the touch sensing panels 300, 400, and 500, a sensed signal generated in the sensing electrodes 320, 420, and 520 in response to a touch may be transmitted to the sensing channel 810. A number of the sensing channels 810 may be determined in response to the sensing electrodes 320, 420, and 520, and the number of the sensing channels 810 may be reduced by dividing a plurality of sensing electrodes 320, 420, and 520 and connecting the plurality of sensing electrodes 320, 420, and 520 to a single sensing channel 810.

The sensing unit 820 may acquire the sensed signal from the sensing electrodes 320, 420, and 520 through the sensing channel 810. The sensing unit 820 may detect whether a touch occurs or a number of occurring touches using the sensed signal received from the sensing channel 810. Touch sensing data acquired by the sensing unit 820 may be transmitted to the processing unit 830.

The processing unit 830 may correct the touch sensing data. According to an embodiment, the sensing unit 820 may compute whether a touch occurs and a touch coordinate using the sensed signal, and processing unit 830 may correct the computed touch coordinate. According to another embodiment, the sensing unit 820 may pre-process the sensed signal, and the processing unit 830 may compute a corrected touch coordinate using the pre-processed sensed signal. Hereinafter, for convenience of description, a first embodiment where the sensing unit 820 is assumed to compute the touch coordinate will be described.

The sensing unit 820 may calculate a touched location using a difference in a capacitance component according to a touched area on the sensing electrodes 320, 420, and 520 formed in a predetermined shape. The processing unit 830 may receive touched location information calculated by the sensing unit 820 to correct an error of the touched location.

According to an embodiment, when a region spaced relatively far from the connection pads 330, 430, and 530 is touched, an error may occur in a process of calculating a touched location by the processing unit 830 due to an electric resistance between the connection pads 330, 430, and 530 and the touched location. Accordingly, the touch sensing control unit 800 may include the processing unit 830 to correct the error. The processing unit 830 may correct the touched location using a value recorded in a predetermined table.

According to an embodiment, the processing unit 830 may correct the touched location using a resistance component value recorded in the predetermined table. As described above, when a region spaced relatively far from the connection pads 330, 430, and 530 is touched, an error may occur in a process of determining a touched location due to an electric resistance between the connection pads 330, 430, and 530 and the touched location. Thus, by recording a value capable of correcting the resistance component in the table in advance, and calculating the touched location based on the value recorded in the table as necessary, an error occurring in a process of calculating the touched location may be corrected.

According to another embodiment, the processing unit 830 may correct the touched location using a coordinate value recorded in the table. An accuracy of determining the touched location may be enhanced by recording, in the table, a value for correcting a coordinate other than a resistance component, and correcting the coordinate of the touched location calculated by the processing unit 830 using the value recorded in the table.

The table used for correcting the touched location by the processing unit 830 may be managed by a table management unit 840. The table management unit 840 may initialize, generate, or correct the value recorded in the table. For example, the table management unit 840 may manage the table by causing a user to touch-input on a predetermined location during an initial operation, comparing a difference between an inputted coordinate and a coordinate actually inputted by the user, and recording the difference in the table. Note that the value initialized, generated, or corrected by the table management unit 840 may correspond to the resistance component or the coordinate.

As described above, in the touch sensing control unit 800, the sensing unit 820 may compute touch sensing data using touch information received through the sensing channel 810. The touch sensing data may include data reporting whether a touch occurs, and touch coordinate data. To correct an error occurring in a process of calculating the touched location, the processing unit 830 may correct the touched location using the value recorded in the table managed by the table management unit 840. The touch sensing control unit 800 may be manufactured by being integrated in a single chip. The touch sensing control unit 800 may be mounted on a printed circuit board (PCB) to be connected to the connection pads 330, 430, and 530 of the touch sensing panels 300, 400, and 500, or may be mounted on the substrates 310, 410, and 510 in a chip-on-glass (COG) form.

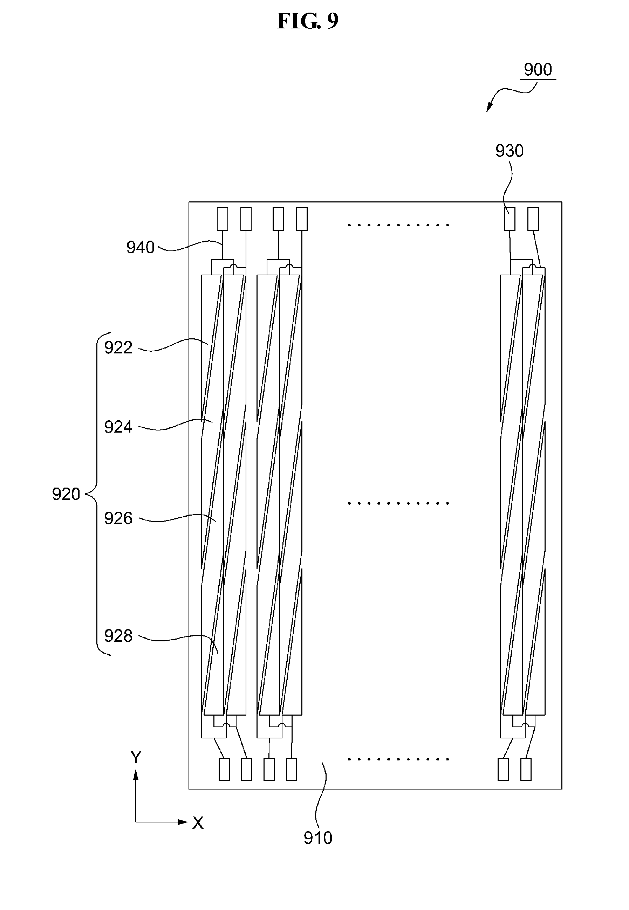

FIG. 9 is a diagram illustrating a touch sensing panel 900 according to an embodiment of the present invention. Referring to FIG. 9, the touch sensing panel 900 according to an embodiment of the present invention may include a substrate 910, a sensing electrode 920, and a connection pad 930, and the like similar to the touch sensing apparatus 200 illustrated in FIG. 2A or the touch sensing panel illustrated in FIG. 3 through FIG. 5. The sensing electrode 920 may be divided into first sensing electrodes 922 and 928, and second sensing electrodes 924 and 926. In particular, each of the first sensing electrodes 922 and 928 and the second sensing electrodes 924 and 926 may have a plurality of protrusions and depressions corresponding to neighboring first sensing electrodes 922 and 928 and second sensing electrodes 924 and 926.

Referring to the sensing electrode 920 of the touch sensing panel 900 illustrated in FIG. 9, a single sensing electrode 920 may include the first sensing electrodes 922 and 928, and the second sensing electrodes 924 and 926. Each of the first sensing electrodes 922 and 928 and the second sensing electrodes 924 and 926 may be formed in a saw-toothed shape having a protrusion and a depression. Thus, a depression of the first sensing electrodes 922 and 928 may correspond to a protrusion of the second sensing electrodes 924 and 926, and a protrusion of the first sensing electrodes 922 and 928 may correspond to a depression of the second sensing electrodes 924 and 926. An overall configuration of the sensing electrode 920 may extend in one axial direction, that is, a Y axial direction.

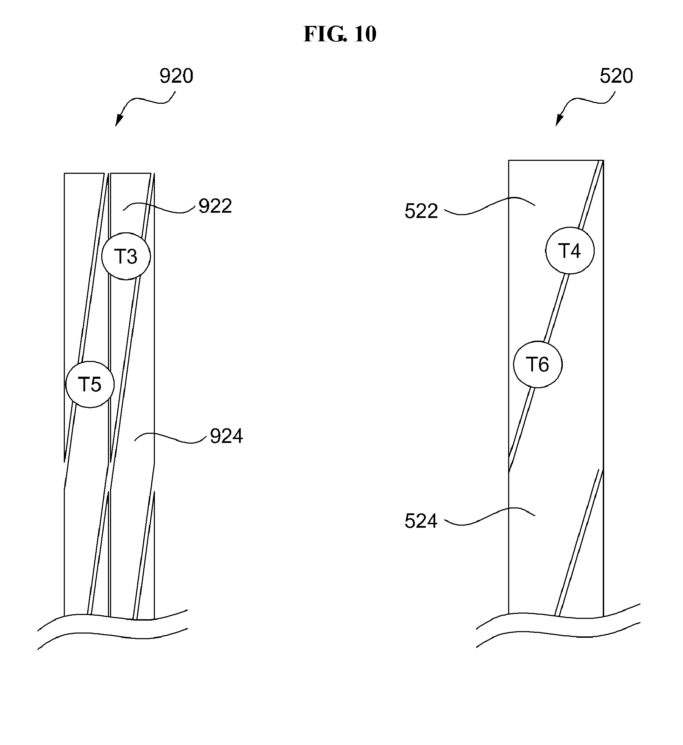

As described above, by forming the first sensing electrodes 922 and 928 and the second sensing electrodes 924 and 926 in the saw-toothed shape, an accuracy of determining a touched location may be enhanced, and a multi-touch input may be accurately determined. Hereinafter, expanded structures of the touch sensing apparatus 500 illustrated in FIG. 5 and the touch sensing apparatus 900 illustrated in FIG. 9 will be described with reference to FIG. 10.

FIG. 10 is a diagram illustrating an expanded view of a portion of a sensing electrode included in the touch sensing panel illustrated in FIG. 5 and FIG. 9. Referring to FIG. 10, the right sensing electrode 520 may be included in the touch sensing apparatus 500 of FIG. 5, and may include the first sensing electrode 522 having a triangular shape and the second sensing electrode 524 having a trapezoidal shape. The left sensing electrode 920 may be included in the touch sensing panel 900 of FIG. 9, and may be divided into a saw-toothed first sensing electrode 922 having multiple protrusions and depressions and a second sensing electrode 924. In the present description, touched locations T3 and T4, and T5 and T6 may be assumed to be the same location on each of the sensing electrodes 520 and 920.

For the sensing electrode 520, in response to a touch occurring at the touched location T4 or the touched location T6, a touched area may be formed in the same ratio with respect to the first sensing electrode 522 and the second sensing electrode 524. Since a magnitude ratio of a touched signal generated in the first sensing electrode 522 and the second sensing electrode 524 for a touch at the touched location T4 may be the same, and a magnitude ratio of a touched signal generated in the first sensing electrode 522 and the second sensing electrode 524 for a touch at the touched location T6 may be the same and thus, an accurate determination of the touched location may be difficult. In particular, in a case where the touched location T4 and the touched location T6 are simultaneously touched, each touched location may be difficult to be independently calculated.

For the sensing electrode 920, in response to a touch occurring at the touched location T3 corresponding to the same location as the touched location T4 of the right sensing electrode 520, a touched area may be formed on the first sensing electrode 922 and the second sensing electrode 924 on the right side. In response to a touch occurring at the touched location T5, a touched area may be formed on the first sensing electrode 922 and the second sensing electrode 924 on the left side. Thus, each touched location may be determined by distinguishing sensed signals generated in response to touches at the touched location T3 and the touched location T5. In particular, for a case where the touched location T3 and the touched location T5 are simultaneously touched, each touched location may be independently calculated.

To enhance an accuracy of determining a touched location, the saw-toothed shape formed in the sensing electrode 920 may be preferably more delicately formed. By forming a saw-toothed shape in each of the first sensing electrode 922 and the second sensing electrode 924 to be longer in an upper and lower direction than a case illustrated in FIG. 9 and FIG. 10, a case where a touched region is solely formed in each of the first sensing electrode 922 and the second sensing electrode 924, or a possibility that touched regions having the same size are formed in each of the first sensing electrode 922 and the second sensing electrode 924 may be eliminated and thus, an accuracy of determining a touched location may be enhanced.

In particular, in a case where multiple touches occur, a merit of a form expressed by the left sensing electrode 920 may be clearer. As the left sensing electrode 920, by delicately dividing the first sensing electrode 922 and the second sensing electrode 924, a resolution of a touch sensing may increase. Thus, in a case where at least two touches simultaneously occur, a coordinate of each touch may be independently and accurately calculated.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

## Claims

1. A touch sensing panel, comprising:
a substrate; and
a plurality of sensing electrodes arranged on the substrate and extended in one axial direction to generate a sensing signal in response to a touch, wherein
at least one sensing electrode among the plurality of sensing electrodes is adjacent to another sensing electrode on both sides of the one axial direction.

2. The touch sensing panel of claim 1, wherein at least one of the plurality of sensing electrodes has a shape corresponding to an adjacent sensing electrode.

3. The touch sensing panel of claim 1, wherein:
the sensing electrode includes at least one protrusion and at least one depression, and
the protrusion of the sensing electrode has a shape complementary to a depression of an adjacent sensing electrode.

4. The touch sensing panel of claim 1, wherein the sensing electrode has a rectangular shape or a trapezoidal shape.

5. The touch sensing panel of claim 1, wherein the plurality of sensing electrodes include a first sub-electrode pair having a shape corresponding to the each other, and a second sub-electrode pair having a shape corresponding to the each other.

6. The touch sensing panel of claim 1, wherein the substrate is a window where at least a portion of the window is exposed to receive a touch.

7. The touch sensing panel of claim 1, further comprising:
a transparent window attached to the sensing electrode to receive a touch.

8. A touch sensing apparatus, comprising:
a plurality of sensing electrodes arranged on one surface of a substrate and extended in one axial direction; and
a control unit connected to the plurality of sensing electrodes to receive a sensing signal, and to generate touch information using the sensing signal, wherein
at least one of the plurality of sensing electrodes is arranged to be adjacent to another sensing electrode in both sides of the one axial direction.

9. The touch sensing apparatus of claim 8, wherein at least one of the plurality of sensing electrodes has a shape corresponding to an adjacent sensing electrode.

10. The touch sensing apparatus of claim 8, wherein:
the sensing electrode includes at least one protrusion and at least one depression, and
the protrusion of the sensing electrode has a shape complementary to a depression of an adjacent sensing electrode.

11. The touch sensing apparatus of claim 8, wherein the sensing electrode has a rectangular shape or a trapezoidal shape.

12. The touch sensing apparatus of claim 8, wherein the one axial direction is a major axial direction of a display region where the sensing electrodes are disposed.

13. The touch sensing apparatus of claim 8, wherein the control unit comprises:
a sensing unit to compute touch sensing data from the sensing signal; and
a processing unit to correct the touch sensing data.

14. The touch sensing apparatus of claim 13, wherein the processing unit adjusts the touch sensing data with reference to a predetermined table.

15. The touch sensing apparatus of claim 13, wherein the processing unit corrects an error in the touch sensing data due to a resistance component between both ends of the sensing electrode.

16. The touch sensing apparatus of claim 8, wherein each of the plurality of sensing electrodes includes at least one boundary shape corresponding to another adjacent sensing electrode.

17. The touch sensing apparatus of claim 8, wherein the control unit determines the touch by using the sensing signal including a change in a capacitance occurring between a touch object and the sensing electrode.

18. A touch sensing panel, comprising:
a plurality of sensing electrodes disposed along one axial direction; and
a computing unit to compute a touch location using a magnitude of a touch signal measured from each of the plurality of sensing electrodes, wherein
at least one of the plurality of sensing electrodes has a shape where a width decreases after gradually increasing along the one axial direction.

19. The touch sensing panel of claim 18, wherein the computing unit computes the touch location by enabling the magnitude of the touch signal measured with respect to each sensing electrode be a weighted value, and evaluating a weighted average of locations where the plurality of sensing electrodes have a maximal width.

20. The touch sensing panel of claim 18, wherein each of the plurality of sensing electrodes has a boundary shape complementary to another adjacent sensing electrode.

21. The touch sensing panel of claim 20, wherein the boundary shape has at least one protrusion and at least one depression.

22. The touch sensing panel of claim 18, wherein the at least one of the plurality of sensing electrodes has a shape in which the same or a symmetrical electrode is connected in the other axial direction intersecting the one axis.
